# DEMANDE DE BREVET EUROPEEN

(11) **EP 4 095 954 A1**
(43) Date de publication de la demande: **30.11.2022**
(21) Numéro de dépôt: 22175330.4
(22) Date de dépôt: 25.05.2022
(51) Int. Cl.: H01M 4/90, H01M 4/86, H01M 8/10, B01J 13/00, C01B 32/00, C08J 9/28

(54) **PROCÉDÉ DE PRÉPARATION D'UN MATÉRIAU CARBONÉ POREUX ET AZOTÉ AVEC DOPANT MÉTALLIQUE, NOTAMMENT UTILE À TITRE DE CATALYSEUR POUR LA RÉDUCTION DE L'OXYGÈNE (ORR)**

(30) Priorité: 28.05.2021 FR 2105570
(71) Demandeur: Commissariat à l'Energie Atomique et aux Energies Alternatives, 75015 Paris (FR)
(72) Inventeur: ROIRON, Camille, 38054 GRENOBLE CEDEX 09 (FR); CELLE, Caroline, 38054 GRENOBLE CEDEX 09 (FR); HEITZMANN, Marie, 38054 GRENOBLE CEDEX 09 (FR); JACQUES, Pierre-André, 38054 GRENOBLE CEDEX 09 (FR); SIMONATO, Jean-Pierre, 38054 GRENOBLE CEDEX 09 (FR)
(74) Mandataire: Nony

(57) **Abrégé**

La présente invention concerne un procédé de préparation d'un matériau carboné poreux, azoté et chargé à cœur par au moins un dopant métallique comprenant au moins les étapes consistant à activer une polymérisation sol-gel, au sein d'un milieu solvant contenant en solution au moins un aldéhyde, au moins un dérivé hydroxybenzène, au moins un composé hydrocarboné source en atomes d'azote et au moins un précurseur métallique dudit dopant métallique, et à une valeur de pH acide ajustée pour permettre la formation dans ledit milieu solvant, de deux phases gélifiées de carbone azotées, dopées et possédant des densités différentes et à isoler la phase gélifiée de densité inférieure.

## Description

### Domaine technique

La présente invention concerne un procédé de fabrication d'un matériau carboné poreux et azoté avec un dopant métallique, avantageusement différent d'un métal noble, tout particulièrement intéressant pour son efficacité catalytique sur la réduction de l'oxygène (ORR) et donc utile dans un système de pile à combustible à membrane échangeuse de protons (PEMFC).

### Technique antérieure

Les piles à combustible à membrane échangeuse de protons (PEMFC) représentent aujourd'hui des dispositifs de conversion d'énergie de grand intérêt au regard de leur efficacité en termes de conversion, de leur importante densité d'énergie et de leur faible impact sur l'environnement. Malheureusement, elles mettent généralement en œuvre, à titre d'espèce catalytique, des métaux nobles. Ainsi, le catalyseur de référence pour la réduction de l'oxygène (ORR) est du platine sur carbone (Pt/C) avec un chargement d'environ 20% massique en platine. Au regard de la rareté et du coût de ces métaux nobles, il a été essentiel de trouver des matériaux catalytiques alternatifs à faible coût et possédant une activité catalytique du même ordre de grandeur, voire améliorée, en vue d'accroître le développement de la technologie PEMFC.

Il a ainsi été mis au point de nouveaux catalyseurs à base de métaux non précieux (NPMC). Pour l'essentiel, ils se présentent sous la forme d'un support poreux carboné sur lequel sont immobilisés des métaux de transition et/ou des atomes d'azote. Selon une variante avantageuse, les structures support carbonées dérivent de la carbonisation d'hydrogels, classiquement obtenus par des réactions de polymérisation sol-gel entre au moins un hydroxybenzène et au moins un aldéhyde. Ces structures possèdent en effet des propriétés uniques, à savoir faible masse volumique, porosité continue et ajustable, surface spécifique élevée et bonnes conductivité et stabilité chimique.

A titre représentatifs de ces catalyseurs à base de métaux non précieux (NPMC) peuvent notamment être cités les matériaux à base de carbone, azote et de sels métalliques décrits dans les documents [1] et [2]. Toutefois, ces matériaux ne donnent pas totale satisfaction notamment en termes de procédé de préparation et/ou d'efficacité. Certains matériaux ont en effet des procédés de préparation contraignants car requérant un nombre trop significatif d'étapes opérationnelles. Quant à leur niveau d'efficacité jugé insuffisant, il est le plus souvent dû à une surface spécifique insuffisante du matériau obtenu, liée également au procédé de fabrication considéré pour l'élaboration de la forme carbonée de ces catalyseurs. La présente invention a donc pour objectif principal de proposer un procédé simple, efficace et de bas coût permettant d'obtenir, facilement des catalyseurs pour la réduction de l'oxygène, sans métal noble, et qui soient néanmoins dotés d'une efficacité améliorée.

Elle vise en outre à proposer un procédé permettant d'obtenir des catalyseurs possédant une densité élevée de sites catalytiques.

Elle vise ainsi à proposer un matériau permettant une puissance améliorée des PEMFC grâce précisément à cette densité accrue en sites catalytiques,

### Résumé de l'invention

Plus précisément, la présente invention concerne un procédé de préparation d'un matériau carboné poreux, azoté et chargé au moins à cœur avec au moins un dopant métallique comprenant au moins les étapes consistant à
(a) activer une polymérisation sol-gel, au sein d'un milieu solvant contenant en solution au moins un aldéhyde, au moins un dérivé hydroxybenzène, au moins un composé hydrocarboné source en atomes d'azote et au moins un précurseur métallique dudit dopant métallique, et à une valeur de pH acide et ajustée pour permettre la formation,, dans ledit milieu solvant, de deux phases gélifiées de carbone azotées, dopées et possédant des densités différentes,
(b) isoler la première phase gélifiée formée,
(c) disposer d'une forme sèche de ladite phase gélifiée isolée en étape (b) et
(d) pyrolyser ladite forme sèche de l'étape (c) en atmosphère non oxydante pour former ledit matériau carboné poreux, azoté et chargé au moins à cœur avec au moins un dopant métallique et le cas échéant le récupérer.

Selon une variante du procédé, les deux phases gélifiées de carbone azotées, dopées et possédant des densités différentes sont formées dans ledit milieu solvant activé en étape (a). Plus particulièrement, la première phase gélifiée formée possède une densité inférieure à celle de la phase gélifiée formée consécutivement à cette première phase gélifiée.

Le procédé selon l'invention comprend alors les étapes consistant à
(a) activer une polymérisation sol-gel, au sein d'un milieu solvant contenant en solution au moins un aldéhyde, au moins un dérivé hydroxybenzène, au moins un composé hydrocarboné source en atomes d'azote et au moins un précurseur métallique dudit dopant métallique, et à une valeur de pH acide ajustée pour former dans ledit milieu solvant, deux phases gélifiées de carbone azotées et dopées, et possédant des densités différentes,
(b) isoler la première phase gélifiée formée
(c) disposer d'une forme sèche de ladite phase gélifiée isolée en étape (b),
(d) pyrolyser ladite forme sèche de l'étape (c) en atmosphère non oxydante pour former ledit matériau carboné poreux, azoté et chargé au moins à cœur avec au moins un dopant métallique et le cas échéant le récupérer.

Avantageusement, le matériau carboné poreux, azoté et chargé au moins à cœur avec au moins un dopant métallique obtenu selon l'invention est un aérogel, cryogel ou xérogel. Plus particulièrement, l'activation de la polymérisation sol-gel est réalisée à une valeur de pH variant de 4 à 5.

Selon un mode de réalisation particulier, le procédé selon l'invention comprend préalablement à l'étape (a), une étape d'ajustement du pH d'un milieu solvant, précurseur du milieu solvant de l'étape (a), et contenant en solution, au moins un composé hydrocarboné source en atomes d'azote et au moins un précurseur métallique dudit dopant métallique, mais dénué de dérivé hydroxybenzène ou d'aldéhyde, à une valeur variant de 4 à 5, notamment à l'aide d'une solution d'acide chlorhydrique.

Comme illustré dans les exemples ci-après, les inventeurs ont, contre toute attente, constaté que l'activation de la polymérisation sol-gel telle que réalisée selon l'invention, c'est-à-dire à un pH spécifique, en l'occurrence variant de 4 à 5 conduit à la formation d'un hydrogel particulier.

De manière surprenante, l'hydrogel, formé à la fin d'une polymérisation sol-gel activée à cette gamme de pH, est hétérogène car il comprend deux phases gélifiées distinctes l'une de l'autre notamment par leur densité.

Par ailleurs, sa phase gélifiée de densité inférieure, qui est la première phase gélifiée formée chronologiquement, s'avère avantageusement enrichie en atomes d'azote, posséder une porosité significativement augmentée et contenir des macropores, comparativement à l'unique phase gélifiée d'un hydrogel homogène, obtenu lors d'une polymérisation sol-gel non activée à la gamme de pH requise selon l'invention.

Or, ces spécificités originales sont précisément avantageuses pour accéder à un matériau doté de sites actifs nombreux et accessibles et donc ayant des performances électrochimiques accrues et apte à produire de forts courants à de faibles surtensions.

Ainsi, la présente invention vise également un matériau carboné poreux, azoté et chargé en dopant métallique, obtenu selon le procédé de l'invention.

En particulier, ce matériau carboné poreux, azoté et chargé au moins à cœur avec au moins un dopant métallique se présente sous la forme d'un aérogel, cryogel ou xérogel, de préférence un aérogel ou un cryogel. Il possède avantageusement une surface spécifique appréciée selon la méthode BET supérieure à 400 m²/g, en particulier supérieure à 450 m²/g voire supérieure à 500 m²/g.

Selon un autre de ses objets, la présente invention se rapporte à l'utilisation d'un matériau carboné poreux, azoté et chargé au moins à cœur avec au moins un dopant métallique et conforme à l'invention, à titre de catalyseur, notamment de catalyseur autosupporté, pour la réduction de l'oxygène (ORR).

Selon encore un autre de ses objets, la présente invention se rapporte à l'utilisation d'un matériau carboné poreux, azoté et chargé au moins à cœur avec au moins un dopant métallique, conforme à l'invention, à titre de matériau cathodique dans un système de pile à combustible à membrane échangeuse de protons (PEMFC). Ce matériau permet avantageusement une bonne accessibilité de ses sites actifs dans un système de pile à combustible.

Un matériau selon l'invention peut notamment être mis en œuvre comme catalyseur de cathode pour pile à combustible à membrane échangeuse de proton, par exemple pour une utilisation en transport léger de type voiture.

### Brève description des dessins

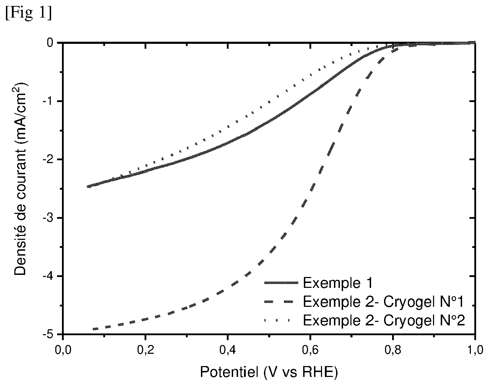

[Fig 1] illustre les performances électrochimiques de cryogels conforme et non conformes à l'invention préparés en exemples 1 et 2.

Au sens de l'invention,
- Un hydrogel homogène est un gel aqueux dont l'aspect macroscopique est uniforme et lisse
- Un hydrogel hétérogène est un gel aqueux dans lequel deux phases d'aspects macroscopiques différents sont superposées
- Une phase gélifiée désigne un bloc de polymère poreux à l'intérieur duquel de l'eau est contenue,
- Un pH acide est un pH de valeur inférieure à 7 et
- La dénomination « dérivé hydroxybenzène » dit encore « hydroxybenzène » désigne un composé chimique constitué d'un cycle benzène porteur d'au moins une fonction hydroxyle, de préférence deux fonctions hydroxyles et pouvant être en outre substitué, notamment par une fonction carboxylique, amide et/ou un radical alkyle en C₁ à C3. Avantageusement, le dérivé hydroxybenzène est apte à réagir selon une réaction de polymérisation sol-gel.

### Description détaillée

Comme il ressort de ce qui précède, la structure carbone/azote formant le matériau carboné selon l'invention est réalisée par polymérisation sol-gel en présence d'un précurseur du dopant métallique et à une gamme de pH spécifique car variant de 4 à 5.

Cette réaction de polymérisation sol-gel ou encore de polycondensation est activée dans un milieu solvant possédant une valeur de pH acide conforme à l'invention et contenant au moins un aldéhyde, au moins un dérivé hydroxybenzène et au moins un composé hydrocarboné source en atomes d'azote dans des conditions propices au déclenchement de la réaction.

Comme précisé ci-dessus, cette valeur de pH acide imposée est propice à la formation, au cours de la polymérisation sol-gel, d'un hydrogel hétérogène car caractérisé par le fait qu'il possède deux phases de carbone, azotées et dopées, gélifiées. Plus précisément, à un tel pH, il est observé la formation d'une première phase gélifiée, qui se dépose au fond du réceptacle dans lequel est réalisée la polymérisation sol-gel, puis la formation, au sein du surnageant contenant cette première phase gélifiée, d'une seconde phase gélifiée de morphologie différente.

Le procédé de l'invention requiert donc au moins la formation de la première phase gélifiée de carbone, azotée et dopée en son étape (a) et l'isolement de cette première phase gélifiée formée, en étape (b).

Ainsi, le procédé de l'invention couvre la variante de réalisation dans laquelle la seconde phase gélifiée n'est pas formée en étape (a) et la variante de réalisation préférée dans laquelle la seconde phase gélifiée est également formée en étape (a), consécutivement à la première phase gélifiée,

En ce qui concerne, le milieu solvant considéré en étape (a), il comprend en solution au moins un aldéhyde, au moins un dérivé hydroxybenzène, au moins un composé hydrocarboné source en atomes d'azote et au moins un précurseur métallique dudit dopant métallique.

Selon une variante, le pH peut être ajusté directement sur un tel milieu, de préférence simultanément à l'activation de la polymérisation ou au tout début du démarrage de la polymérisation.

Selon une autre variante privilégiée, le procédé comprend, préalablement à l'activation de la polymérisation sol-gel, l'ajustement du pH à une valeur convenant à l'invention sur un milieu solvant précurseur du milieu solvant considéré en étape (a) car non propice en l'état au démarrage de la polymérisation

Par exemple, ce milieu précurseur peut être un milieu contenant en solution, au moins un dérivé hydroxybenzène, au moins un composé hydrocarboné source en atomes d'azote et au moins un précurseur métallique dudit dopant métallique mais dénué en composant aldéhyde ou un milieu contenant en solution, au moins un aldéhyde, au moins un composé hydrocarboné source en atomes d'azote et au moins un précurseur métallique dudit dopant métallique mais dénué de dérivé hydroxybenzène.

En ce qui concerne l'ajustement du pH, il est réalisé par ajout soit d'une solution acide soit d'une solution basique selon la valeur de pH du milieu solvant considéré avant démarrage de la polymérisation. Comme il ressort de ce qui précède, l'activation de la polymérisation doit se réaliser dans la gamme de pH requise selon l'invention.

L'acide ou la base est bien entendu choisi pour ne pas affecter la réaction de polymérisation sol-gel qui doit se réaliser. En d'autres termes, il doit être inerte à l'égard des composants du milieu solvant considéré en étape (a).

A titre illustratif des bases convenant tout particulièrement à l'invention peuvent notamment être cités le carbonate de sodium et l'hydroxyde de sodium.

A titre illustratif des acides convenant tout particulièrement à l'invention peuvent notamment être cités les acides organiques tels que par exemple les acide acétique, acide trifluoroacétique, acide formique, acide propionique et acide sulfonique et les acides inorganiques notamment choisis parmi l'acide perchlorique et l'acide chlorhydrique.

Convient tout particulièrement à l'invention, à titre d'acide, l'acide chlorhydrique.

Par ailleurs le milieu solvant de l'étape (a) comprend au moins un aldéhyde notamment choisi parmi les aldéhydes à chaine linéaire comme le formaldéhyde, l'éthanal, le propanal, les aldéhydes cycliques comme le furfural, les aldéhydes contenant une ou des fonctions aminées comme la pyrrolidine, l'aminoacétaldéhyde, et leurs mélanges, de préférence choisi parmi le formaldéhyde, l'éthanal, le propanal et leurs mélanges, et plus préférentiellement comprend au moins le formaldéhyde. L'aldéhyde peut également y être généré à partir d'une forme dite précurseur, par exemple un acétal ou hémiacétal.

Le milieu solvant en étape (a) comprend également au moins un dérivé hydroxybenzène notamment choisi parmi le phénol, le résorcinol, le catéchol, l'acide di-hydroxy-4-méthylbenzoïque, le 2,6-dihydroxybenzamine, l'acide dihydroxybenzoïque, leurs dérivés et leurs mélanges, de préférence choisi parmi le résorcinol et ses dérivés, et plus préférentiellement comprend au moins le résorcinol.

En ce qui concerne le composé hydrocarboné source en atomes d'azote, il est avantageusement polymérisable.

En particulier, il comprend au moins deux fonctions amines primaires et/ou secondaires, et plus préférentiellement primaires. Il est apte à réagir selon une réaction de polymérisation sol-gel.

En particulier, le composé hydrocarboné source en atomes d'azote est différent d'un macrocycle aromatique azoté tel que défini ci-après.

Ainsi, le milieu solvant en étape (a) comprend au moins un composé hydrocarboné source en atomes d'azote choisi parmi les composés aliphatiques et/ou aromatiques substitués par des fonctions amines primaires ou secondaires et leurs dérivés, et comprend de préférence au moins 2 atomes de carbone, notamment de 2 à 20 atomes de carbone.

Plus particulièrement, le milieu solvant en étape (a) peut notamment comprendre au moins un composé hydrocarboné source en atomes d'azote choisi parmi les dérivés de la triazine, de la phénantroline, de la pyridine et de la pyrazine, et de préférence comprend au moins la mélamine.

La combinaison d'un aldéhyde, d'un dérivé hydroxybenzène et d'un composé hydrocarboné source en atomes d'azote permet avantageusement, lors de la polymérisation sol-gel, d'intégrer les atomes d'azote du composé hydrocarboné source en atomes d'azote dans une structure polymérique comprenant également des unités issues du dérivé hydroxybenzène. Avantageusement, le ou les dérivé(s) hydroxybenzène et le ou les aldéhyde(s) sont mis en présence dans un rapport molaire dérivé(s) hydroxybenzène / aldéhyde(s) variant de 0,05 à 2,0, de préférence de 0,1 à 1,0, et plus préférentiellement de 0,2 à 0,4. Avantageusement, le ou les dérivé(s) hydroxybenzène et le ou les composé(s) hydrocarboné(s) source(s) en atome d'azote sont mis en présence dans un rapport molaire dérivé(s) hydroxybenzène / composé(s) hydrocarboné(s) variant de 0,2 à 5,0, de préférence de 0,5 à 2,0, et plus préférentiellement de 0,8 à 1,5.

Selon un mode de réalisation préféré, la polymérisation sol-gel met en présence du formaldéhyde, de la mélamine et du résorcinol.

Comme requis selon l'invention, la polymérisation sol-gel, ou encore polycondensation, est initiée et réalisée en présence d'au moins un précurseur métallique de dopant métallique, qui possède au moins un métal de transition.

Les précurseurs métalliques convenant à l'invention sont de préférence choisis parmi les sels et complexes métalliques de métaux de transition.

Le métal de transition peut être choisi parmi le manganèse (Mn), le cobalt (Co), le titane (Ti), le fer (Fe), le ruthénium (Ru), l'osmium (Os), le nickel (Ni), le cuivre (Cu), et le zinc (Zn), de préférence parmi le manganèse (Mn), le cobalt (Co), et le fer (Fe), et plus préférentiellement est au moins un sel ou complexe de fer II ou III.

Le métal de transition tel que défini ci-dessus peut être présent à n'importe quel degré d'oxydation selon le choix du métal de transition mis en œuvre. Par exemple, lorsque le métal de transition mis en œuvre est l'atome de fer, il peut se trouver à un degré d'oxydation 0, +2 ou +3.

A titre illustratif, des sels métalliques peuvent tout particulièrement être cités les acétates, les nitrates, les chlorures, les ammoniums et les sulfates.

Avantageusement, le précurseur métallique est au moins un sel ou complexe de fer III ou II. A titre illustratif des structure de fer de type complexe convenant à l'invention, peuvent tout particulièrement être citées les structures de type ferrocène, et les complexes de fer III et fer II, comprenant un ou plusieurs ligands azotés bidentés ou tétradentés à motif notamment pyrridine, phénanthroline, pyrazine, éthylène diamine ou encore 2,4,6-tris(2-pyridyl)-s-triazine (TPTZ).

Le procédé selon l'invention peut être réalisé avec un unique précurseur de dopant métallique ou un mélange de précurseurs métalliques.

La quantité en dopant métallique est ajustée pour obtenir un taux de charge au niveau de l'aérogel obtenu suffisant pour conditionner son efficacité à titre de catalyseur pour la réaction de réduction de l'oxygène (ORR).

Le précurseur métallique est avantageusement mis en œuvre sous une forme solubilisée.

Dans une variante de réalisation, le précurseur métallique de dopant métallique, peut posséder au moins un métal de transition coordonné à au moins un macrocycle aromatique azoté, également nommé métallomacrocycle. En d'autres termes, les métallomacrocycles aromatiques convenant au procédé de l'invention comportent un macrocycle aromatique azoté dont les atomes d'azote sont coordonnés au métal de transition.

Par macrocycle aromatique, on entend un composé organique dont au moins une partie des électrons sont délocalisés, la délocalisation faisant intervenir au moins 12 électrons en commun, de préférence au moins 16 électrons en commun. Ce caractère aromatique confère à ces macrocycles une stabilité thermodynamique importante.

Le macrocycle aromatique azoté, c'est-à-dire sans l'atome métallique, possède une masse moléculaire comprise entre 100 et 5000 g/mol, de préférence entre 200 et 2000 g/mol.

La proportion massique en azote présente dans le macrocycle aromatique azoté, c'est-à-dire sans l'atome métallique, est comprise entre 3 et 80% en poids, de préférence entre 5 et 50%, de préférence entre 8 et 40%.

En particulier, le macrocycle aromatique azoté est choisi parmi les phtalocyanines, les porphyrines, les chlorines, et les corrines, substituées ou non, de préférence parmi les phtalocyanines et les porphyrines, substituées ou non.

Avantageusement, le macrocycle aromatique azoté est hydrosoluble ou hydrodispersible et de préférence hydrosoluble.

Selon un mode de réalisation particulier, ce macrocycle aromatique azoté est substitué par un ou plusieurs groupements hydrophiles. De tels groupements sont avantageux pour faciliter la dispersion ou la dissolution du métallomacrocycle dans le milieu solvant, notamment dans l'eau. En particulier, le macrocycle aromatique azoté est substitué par au moins une fonction choisie parmi les fonctions anioniques, cationiques et hydrophiles électriquement neutres. Parmi les fonctions anioniques peuvent être citées les fonctions sulfonates, carboxylates et phosphonates. A titre d'exemple de fonctions cationiques peuvent être citées les fonctions alkylammonium, pyridinium et imidazolinium. Les fonctions hydrophiles électriquement neutres peuvent être notamment choisies parmi les fonctions acides sulfoniques, carboxyliques, phosphoniques, ou parmi les chaines de type polyethylèneglycol et leurs dérivés.

La mise en œuvre de macrocycles aromatiques azotés est avantageuse pour optimiser l'immobilisation du métal de transition au sein de la structure carbonée support.

Il est entendu que le métal peut être coordonné en outre, de manière covalente ou non, à une ou plusieurs entités chimiques distinctes d'un macrocycle aromatique azoté, par exemple à au moins une molécule de dioxygène, un atome d'halogène ou un hétéroatome d'un dérivé thiol, pyrrolidine, pipéridine, alcool ou éther.

Selon un mode de réalisation particulier, le métallomacrocycle aromatique azoté peut être choisi parmi les phtalocyanines substituées hydrosolubles ou non substituées coordonnant un métal de transition, et les porphyrines substituées ou non, de préférence substituées, coordonnant un métal de transition, le métal de transition étant notamment le fer.

De préférence, le métallomacrocycle aromatique azoté est choisi parmi les composés de formule (A), (B) et (C) :

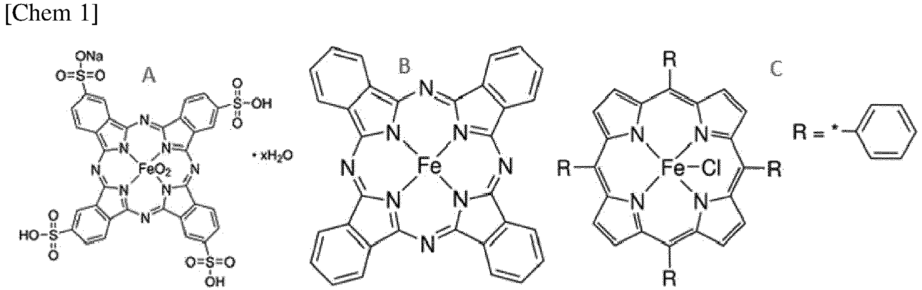

Avantageusement, un procédé de l'invention met en œuvre un précurseur métallique, dans un rapport 0,01 à 1 et de préférence de 0,02 à 0,2 exprimé en équivalent métal/ atome(s) d'azote présent(s) dans le composé hydrocarboné source en atome d'azote.

Par exemple dans le cas d'une polycondensation mettant en œuvre 0,2 mole d'aldéhyde pour 0,06 mole d'hydroxybenzène et 0,03 mole de composé hydrocarboné source de 6 atomes d'azote, un nitrate de Fer pourra être utilisé à raison 0,01 mole de nitrate de Fer soit dans un rapport précurseur métallique par atome d'azote de 0,055.

Dans le cas où ce précurseur métallique contient un ou plusieurs macrocycles aromatiques azotés, un tel précurseur métallique et le ou les composé(s) hydrocarboné(s) polymérisable(s) et source(s) en atome d'azote sont mis en présence dans un rapport molaire macrocycle aromatique azoté / composé(s) hydrocarboné(s) variant de 0,001 à 1,0 et de préférence de 0,005 à 0,5.

Les composés mis en œuvre dans le procédé selon l'invention sont formulés dans un solvant apte à les disperser voire les solubiliser, si nécessaire avec chauffage.

Ce solvant est de préférence un milieu aqueux. Il peut notamment être l'eau ou un milieu hydroalcoolique. En particulier, le milieu hydroalcoolique est un mélange d'eau et d'un ou plusieurs alcools dans des proportions variables.

La dissolution des hydroxybenzène(s) et composé(s) hydrocarboné(s) source en atomes d'azote, voire aldéhyde(s), et la dispersion ou la dissolution du ou des précurseurs métalliques dans le milieu solvant peut être obtenue par chauffage de ce milieu solvant les contenant, en particulier à une température variant de 60°C à 80°C.

En particulier, le milieu solvant en étape (a) comprend en outre au moins un catalyseur de la polymérisation, plus particulièrement un sel de sodium, notamment du carbonate de sodium. Le catalyseur permet avantageusement de stimuler la réaction de polymérisation sol-gel. La polymérisation sol-gel est avantageusement réalisée à une température d'environ 85°C. En particulier, l'activation en étape (a) peut être réalisée en exposant ledit milieu solvant à une température variant de 60°C à 95°C, et de préférence de 80°C à 90°C.

Comme énoncé ci-dessus, la polymérisation sol-gel, réalisée dans les conditions de pH acide selon l'invention et donc à un pH variant de 4 à 5, est apte à former au sein du milieu solvant, deux phases gélifiées de carbone azotées et dopées qui se distinguent l'une de l'autre notamment par leur densité. La première phase gélifiée formée, qui est celle possédant la densité la plus faible, est isolée du milieu de polymérisation.

Sa séparation des autres composants du milieu solvant relève des compétences de l'homme du métier.

Lorsqu'elle doit être séparée de la seconde phase gélifiée de densité supérieure, formée consécutivement à elle, cette séparation peut être réalisée par action mécanique, par exemple découpage des phases l'une de l'autre à l'aide par exemple d'une lame fine coupante.

Comme énoncé ci-dessus, la première phase gélifiée formée, ainsi isolée, est ensuite séchée. Selon le mode de séchage retenu, elle est alors transformée en cryogel, en aérogel ou en xérogel.

Selon une première variante, la forme sèche de l'étape (c) est obtenue par séchage de la phase gélifiée isolée en étape (b), au contact d'un fluide supercritique, notamment de l'eau ou du dioxyde de carbone, en particulier du dioxyde de carbone et est un aérogel organique azoté. Selon cette variante, le séchage transforme la phase gélifiée isolée en étape (b) en un aérogel organique azoté contenant un précurseur de site actif. Cette forme sèche est dédiée à former un aérogel de carbone azoté et chargé au moins à cœur avec au moins un dopant métallique à l'issue du procédé.

Selon une seconde variante, la forme sèche de l'étape (c) est obtenue par congélation de la phase gélifiée isolée en étape b), notamment au contact d'azote liquide, et lyophilisation de la phase gélifiée congelée et est un cryogel organique azoté. En d'autres termes, ce mode de séchage transforme la phase gélifiée isolée en étape (b) en un cryogel organique azoté contenant un précurseur de site actif. Cette forme sèche de l'étape (c) est dédiée à former un cryogel de carbone azoté et chargé au moins à cœur avec au moins un dopant métallique à l'issue du procédé.

Selon une troisième variante, la forme sèche de l'étape (c) est obtenue par évaporation du solvant de la phase gélifiée isolée en étape b), à température et pression contrôlées et est un xérogel organique azoté. Par exemple, selon cette variante, la forme sèche peut être formée par réduction de la pression de 10⁵ à 10³ Pa en 5 jours à 60°C dans une étuve, puis par maintien des échantillons à 150 °C et 10³ Pa pendant 3 jours. Ce mode de séchage transforme donc la phase gélifiée isolée en étape (b) en un xérogel organique azoté contenant un précurseur de site actif. Cette forme sèche de l'étape (c) est plus particulièrement dédiée à former un xérogel de carbone azoté et chargé au moins à cœur avec au moins un dopant métallique à l'issue du procédé.

Le cryogel, aérogel ou xérogel organique azoté contenant un précurseur de site actif ainsi obtenu est ensuite pyrolysé pour former respectivement un cryogel, aérogel ou xérogel de carbone azoté. La pyrolyse permet avantageusement de transformer une structure organique en une structure carbonée « graphitique ».

Selon le procédé de séchage du gel, la température et la durée de la pyrolyse, il est possible de contrôler la taille des pores et la structure des matériaux carbonés poreux, azotés et dopés obtenus selon l'invention.

Avantageusement, la pyrolyse est réalisée à une température variant de 750°C à 1200°C, notamment de 750°C à 850°C, voire d'environ 800°C.

Elle est notamment réalisée sous atmosphère inerte, en particulier non oxydante, par exemple sous azote ou argon, et de préférence sous argon. Cette atmosphère peut notamment comprendre de l'ammoniac et/ou des composés azotés.

Cette pyrolyse peut être réalisée en imposant une montée et une descente en température par paliers à l'image par exemple du processus décrit dans les exemples ci-après. En particulier, le profil de température peut comprendre une montée en température d'une durée de 2h à 6h, suivie d'une stabilisation en température pendant 1h à 4h, de préférence entre 2h et 3h, puis diminution de la température par l'inertie du four.

Selon un autre de ses aspects, la présente invention vise des matériaux carbonés poreux, azotés et chargés au moins à cœur avec au moins un dopant métallique obtenus selon le procédé de l'invention.

Elle vise en particulier des matériaux carbonés poreux, azotés et chargés au moins à cœur avec au moins un dopant métallique se présentant sous la forme d'un aérogel, cryogel ou xérogel.

Ils sont chargés à cœur avec au moins un dopant métallique choisi parmi les métaux de transition manganèse (Mn), cobalt (Co), titane (Ti), fer (Fe), ruthénium (Ru), osmium (Os), nickel (Ni), cuivre (Cu), et zinc (Zn), de préférence manganèse (Mn), cobalt (Co), et fer (Fe). Selon un mode de réalisation préféré, ils sont dopés en atomes de Fer II et/ou Fer III.

De préférence, le matériau carboné poreux, azoté et chargé au moins à cœur est dénué de nanoparticules métalliques, notamment de fer, en particulier de diamètre d'au moins 1 nm.

Le taux de charge massique en dopants métalliques d'un matériau conforme à l'invention, peut varier de 0,001% à 15%, de préférence de 0,01% à 5% exprimé en masse d'atomes de métal par rapport à la masse totale dudit matériau. Le taux de charge en dopants métallique peut par exemple être caractérisé par absorption atomique.

Le taux de charge massique en azote d'un matériau conforme à l'invention, peut être d'au moins 3% de préférence au moins de 5% et plus préférentiellement de 6% à 15%, exprimé en masse d'atomes d'azote par rapport à la masse totale dudit matériau. Le taux de charge en atomes d'azote peut par exemple être caractérisé par analyse élémentaire.

Comme illustré dans les exemples ci-après, les matériaux selon l'invention possèdent une porosité hiérarchique c'est-à-dire un mixte de mésoporosité et microporosité à l'intérieur d'une structure macroporeuse.

Ils possèdent en particulier un grand volume de pores, notamment avec une distribution de taille de pores caractérisée par un pic entre 2 et 20 nm caractéristique du mésoporeux.

La formation de structure en éponge macroporeuse de ces polymères conduit donc à l'obtention de matériaux « micro-meso-macro-poreux » qui permettent une bonne diffusion des espèces à l'intérieur des matériaux.

Ainsi, le matériau carboné poreux, azoté et chargé peut posséder une surface spécifique appréciée selon la méthode BET supérieure à 400 m²/g, en particulier supérieure à 450 m²/g voire supérieure à 500 m²/g.

Les matériaux carbonés poreux, azotés selon l'invention possèdent avantageusement des sites actifs, ou sites catalytiques, au niveau des dopants métalliques, qui sont accessibles à des réactifs du fait de la porosité élevée du matériau. En conséquence, et comme illustré en exemples, les matériaux carbonés poreux, azotés selon l'invention ont des performances catalytiques supérieures à celles obtenues lorsque la polymérisation sol-gel n'est pas réalisée à une valeur de pH acide conforme à l'invention.

Les matériaux carbonés poreux, azotés et chargés au moins à cœur avec au moins un dopant métallique conformes à l'invention sont tout particulièrement utiles à titre de catalyseurs pour la réduction de l'oxygène. En particulier, ces matériaux sont utiles à titre de catalyseurs autosupportés pour la réduction de l'oxygène.

Ces matériaux peuvent également être utilisés comme adsorbants, supports de catalyseur avancés et matériaux d'électrode pour supercondensateurs, batteries rechargeables, piles à combustible, etc.

En particulier ils peuvent être utilisés à titre de matériau cathodique dans un système de pile à combustible à membrane échangeuse de protons (PEMFC). Ils peuvent également être utilisés à titre de cathode dans un système de pile à combustible à membrane échangeuse de protons (PEMFC).

### Matériels et Méthodes

La porosité des matériaux est caractérisée par la mesure de leur surface spécifique par la méthode Brunauer-Emmet-Teller (BET) à partir de l'isotherme d'absorption d'azote à 77K des matériaux.

Les performances électrochimiques des matériaux sont évaluées par dépôt (chargement en catalyseur de 0,3 mg/cm²) sur électrode tournante en électrolyte acide (H2SO4 0,1M) avec une contre électrode en titane et une électrode au sulfate mercureux comme référence.

La teneur en azote est caractérisée par analyse élémentaire.

La morphologie des matériaux est caractérisée par microscopie électronique à balayage avec une tension de 15 kV et l'appareillage FEG SEM Leo 1530 de Zeiss.

### Exemple 1

### Synthèse d'un cryogel non conforme à l'invention

0,630 g de Résorcinol et 0,550 g de Mélamine sont ajoutés ensemble dans 52 ml d'eau distillée avec 0,010 g de carbonate de sodium. Le mélange est agité à 70°C jusqu'à complète dissolution des poudres. On ajoute ensuite à la solution 0,200 g de Fe(NO₃)₃ en agitant. Le pH est ensuite ajusté à 3,3 par ajout d'acide chlorhydrique concentré à 3 molaire. On ajoute ensuite à la solution 1,622 g d'une solution de formaldéhyde à 37% en masse, en agitant. On place ensuite la solution à 85°C dans un récipient fermé pendant 120h.

Un hydrogel homogène est obtenu. Son surnageant est éliminé et la phase gélifiée « solide » ainsi isolée est plongée dans l'azote liquide. La forme congelée ainsi obtenue est ensuite introduite dans un bocal de lyophilisation qui est raccordé au lyophilisateur (0,01 mbar avec condensation à -88°C) pendant 5 jours.

Le cryogel organique récupéré placé dans une nacelle en quartz est ensuite pyrolysé dans un four tubulaire sous flux d'argon (80 NL/h) avec une pente de 3,3 K/min jusqu'à 800°C puis maintien pendant 2h à 800°C avant redescente à température ambiante.

### Exemple 2

### Synthèse d'un cryogel conforme à l'invention

0,630 g de Résorcinol et 0,550 g de Mélamine sont ajoutés ensemble dans 52 mL d'eau distillée avec 0,010 g de carbonate de sodium. Le mélange est agité à 70°C jusqu'à complète dissolution des poudres. On ajoute ensuite à la solution 0,200 g de Fe(NO₃)₃ en agitant. Le pH est ensuite ajusté à 4,9 par ajout d'acide chlorhydrique concentré à 3 molaire. On ajoute ensuite à la solution 1,622 g d'une solution de formaldéhyde à 37% en masse, sous agitation. On place ensuite la solution à 85°C dans un récipient fermé pendant 120h.

Un hydrogel hétérogène est formé qui comprend deux phases gélifiées de densités différentes. Le surnageant est éliminé et les deux phases gélifiées séparées l'une de l'autre par découpage au scalpel du bloc au niveau de la démarcation entre les deux phases pour être ensuite plongées de manière séparée dans de l'azote liquide. La phase la moins dense est indexée N°1 et la plus dense N°2. Chacune des formes congelées ainsi obtenues est ensuite introduite dans un bocal de lyophilisation qui est raccordé au lyophilisateur (0,01 mbar avec condensation à -88°C) pendant 5 jours.

Chacun des deux cryogels organiques récupérés est ensuite placé dans une nacelle en quartz et pyrolysé dans un four tubulaire sous flux d'argon (80 NL/h) avec une pente de 3,3 K/min jusqu'à 800°C puis maintien pendant 2h à 800°C avant redescente à température ambiante.

### Exemple3

Caractérisation des cryogels obtenus en exemples 1 à 2.

### a) Caractérisation de leur porosité

La surface spécifique des cryogels obtenus en exemples 1 et 2 est caractérisée selon la méthode détaillée dans le chapitre matériels et méthodes, et les valeurs obtenues sont reportées en tableau 1.

Comme il ressort du tableau 1, la porosité du cryogel N°1, préparé selon le procédé de l'invention, est significativement la plus élevée. Il offre manifestement une meilleure accessibilité à ses sites réactionnels.

**[Tableau 1]**

| **Cryogel** | **Surface spécifique BET (m²/g)** |
|---|---|
| Exemple 1 Cryogel témoin | 348 |
| Exemple 2-Cryogel N°1 | 538 |
| Exemple 2-Cryogel N°2 | 359 |

### b) Evaluation de leurs performances électrochimiques

Les performances électrochimiques des cryogels obtenus en exemples 1 et 2 sont évaluées selon la méthode détaillée dans le chapitre matériels et méthodes, et les résultats sont représentés en figure 1.

La figure 1 révèle que le cryogel N°1 préparé selon le procédé de l'invention est le plus performant.

### c) Caractérisation de leur teneur en azote

Les valeurs déterminées par analyse élémentaire de chacun des cryogels sont présentées dans le tableau 2 ci-après.

**[Tableau 2]**

| **Cryogel** | **Taux d'azote (pds%)** |
|---|---|
| Exemple 1 Cryogel témoin | 1,9 |
| Exemple 2-Cryogel N°1 | 5,7 |
| Exemple 2-Cryogel N°2 | 1,7 |

La teneur en azote du cryogel N°1 préparé selon le procédé de l'invention est plus du double de celles des deux autres cryogels.

### d) Morphologie par microscopie électronique à balayage

Seul, le cryogel N°1, conforme à l'invention, présente avantageusement une porosité hiérarchique c'est-à-dire de la mesoporosité et microporosité à l'intérieur d'une structure macroporeuse. Cette structure permet une bonne diffusion des espèces à l'intérieur des matériaux.

### Liste des documents cités

[1] L. Zhang et al, Electrochimica Acta, 2018, vol. 262, p. 326-336,
[2] Y. Wang et al., Electrocatalysis, nov. 2020, 10.1007/s12678-.

## Revendications

1. Procédé de préparation d'un matériau carboné poreux, azoté et chargé au moins à cœur avec au moins un dopant métallique comprenant au moins les étapes consistant à
(a) activer une polymérisation sol-gel, au sein d'un milieu solvant contenant en solution au moins un aldéhyde, au moins un dérivé hydroxybenzène, au moins un composé hydrocarboné source en atomes d'azote et au moins un précurseur métallique dudit dopant métallique, et à une valeur de pH acide et ajustée pour permettre la formation, dans ledit milieu solvant, de deux phases gélifiées de carbone azotées, dopées et possédant des densités différentes, ladite activation étant notamment réalisée en exposant ledit milieu solvant à une température variant de 60°C à 95°C, et de préférence de 80°C à 90°C,
(b) isoler la première phase gélifiée formée,
(c) disposer d'une forme sèche de ladite phase gélifiée isolée en étape (b),
(d) pyrolyser ladite forme sèche de l'étape (c) en atmosphère non oxydante pour former ledit matériau carboné poreux, azoté et chargé au moins à cœur avec au moins un dopant métallique et le cas échéant le récupérer.

2. Procédé selon la revendication précédente dans lequel les deux phases gélifiées de carbone azotées, dopées, et possédant des densités différentes sont formées dans ledit milieu solvant activé en étape (a).

3. Procédé selon la revendication 1 ou 2 dans lequel la première phase gélifiée formée possède une densité inférieure à celle de la phase gélifiée formée consécutivement à cette première phase gélifiée.

4. Procédé selon l'une quelconque des revendications précédentes ledit matériau carboné poreux, azoté et chargé au moins à cœur avec au moins un dopant métallique est un aérogel, cryogel ou xérogel.

5. Procédé selon l'une quelconque des revendications précédentes dans lequel l'activation de ladite polymérisation sol-gel est réalisée à un pH variant de 4 à 5.

6. Procédé selon l'une quelconque des revendications précédentes comprenant préalablement à l'étape (a) une étape d'ajustement du pH d'un milieu solvant, précurseur du milieu solvant de l'étape (a), et contenant en solution au moins un composé hydrocarboné source en atomes d'azote et au moins un précurseur métallique dudit dopant métallique, mais dénué de dérivé hydroxybenzène ou d'aldéhyde, à une valeur variant de 4 à 5, notamment à l'aide d'une solution d'acide chlorhydrique.

7. Procédé selon l'une quelconque des revendications précédentes dans lequel ledit milieu solvant en étape (a) comprend au moins un aldéhyde choisi parmi les aldéhydes à chaine linéaire comme le formaldéhyde, l'éthanal, le propanal, les aldéhydes cycliques comme le furfural, les aldéhydes contenant une ou des fonctions aminées comme la pyrrolidine, l'aminoacétaldéhyde, et leurs mélanges, de préférence choisi parmi le formaldéhyde, l'éthanal, le propanal et leurs mélanges, et plus préférentiellement comprend au moins le formaldéhyde.

8. Procédé selon l'une quelconque des revendications précédentes dans lequel ledit milieu solvant en étape (a) comprend au moins un dérivé hydroxybenzène choisi parmi le phénol, le résorcinol, le catéchol, l'acide di-hydroxy-4-méthylbenzoïque, le 2,6-dihydroxybenzamine, l'acide dihydroxybenzoïque, leurs dérivés et leurs mélanges, de préférence choisi parmi le résorcinol et ses dérivés, et plus préférentiellement comprend au moins le résorcinol.

9. Procédé selon l'une quelconque des revendications précédentes, dans lequel le composé hydrocarboné polymérisable et source en atomes d'azote comprend au moins deux fonctions amines primaires et/ou secondaires et notamment choisi parmi les composés aliphatiques et/ou aromatiques substitués par des fonctions amines primaires ou secondaires et leurs dérivés, notamment choisi parmi les dérivés de la triazine, de la phénantroline, de la pyridine et de la pyrazine et de préférence comprend au moins la mélamine.

10. Procédé selon l'une quelconque des revendications précédentes dans lequel le ou les dérivé(s) hydroxybenzène et le ou les aldéhyde(s) sont mis en présence dans un rapport molaire dérivé(s) hydroxybenzène / aldéhyde(s) variant de 0,05 à 2,0, de préférence de 0,1 à 1,0, et plus préférentiellement de 0,2 à 0,4.

11. Procédé selon l'une quelconque des revendications précédentes dans lequel le ou les dérivé(s) hydroxybenzène et le ou les composé(s) hydrocarboné(s) source(s) en atome d'azote sont mis en présence dans un rapport molaire dérivé(s) hydroxybenzène / composé(s) hydrocarboné(s) variant de 0,2 à 5,0, de préférence de 0,5 à 2,0 et plus préférentiellement de 0,8 à 1,5.

12. Procédé selon l'une quelconque des revendications précédentes dans lequel ladite polymérisation sol-gel met en présence du formaldéhyde, de la mélamine et du résorcinol.

13. Procédé selon l'une quelconque des revendications précédentes dans lequel ledit précurseur métallique est choisi parmi les sels et complexes métalliques des métaux de transition parmi le manganèse (Mn), le cobalt (Co), le titane (Ti), le fer (Fe), le ruthénium (Ru), l'osmium (Os), le nickel (Ni), le cuivre (Cu), et le zinc (Zn), de préférence parmi le manganèse (Mn), le cobalt (Co), et le fer (Fe), et plus préférentiellement est au moins un sel ou complexe de fer II ou III.

14. Procédé selon l'une quelconque des revendications précédentes dans lequel ledit précurseur métallique comprend au moins un métal de transition coordonné à au moins un macrocycle aromatique azoté notamment choisi parmi les phtalocyanines, les porphyrines, les chlorines, et les corrines, substituées ou non, et de préférence parmi les phtalocyanines et les porphyrines, substituées ou non.

15. Procédé selon l'une quelconque des revendications précédentes dans lequel le précurseur métallique est mis en œuvre dans un rapport de 0,01 à 1 et de préférence de 0,02 à 0,2 exprimé en équivalent métal/ atome(s) d'azote présent(s) dans le composé hydrocarboné source en atome d'azote.

16. Procédé selon l'une quelconque des revendications précédentes, dans lequel la forme sèche de l'étape (c) est obtenue par séchage de la phase gélifiée isolée en étape (b), au contact d'un fluide supercritique et est un aérogel organique azoté.

17. Procédé selon l'une quelconque des revendications 1 à 15 dans lequel ladite forme sèche de l'étape (c) est formée par congélation de la phase gélifiée, isolée en étape (b), et lyophilisation de ladite phase congelée et est un cryogel organique azoté.

18. Procédé selon l'une quelconque des revendications 1 à 15 dans lequel la forme sèche de l'étape (c) est formée par évaporation du solvant de la phase gélifiée, isolée en étape (b), à température et pression contrôlées et est un xérogel organique azoté.

19. Matériau carboné poreux, azoté et chargé au moins à cœur avec au moins un dopant métallique préparé selon l'une quelconque des revendications 1 à 18, possédant en particulier une surface spécifique appréciée selon la méthode BET supérieure à 400 m²/g, plus particulièrement supérieure à 450 m²/g voire supérieure à 500 m²/g.

20. Matériau selon la revendication 19 dont la teneur en azote est d'au moins 3% de préférence au moins de 5% et plus préférentiellement de 6% à 15%, exprimé en masse d'atomes d'azote par rapport à la masse totale dudit matériau.

21. Matériau selon l'une quelconque des revendications 19 ou 20 dont le taux de charge massique en dopants métalliques varie de 0,001% à 15%, de préférence de 0,01% à 5% exprimé en masse d'atomes de métal par rapport à la masse totale dudit matériau, ledit dopant métallique étant en particulier choisi parmi les métaux de transition manganèse (Mn), cobalt (Co), titane (Ti), fer (Fe), ruthénium (Ru), osmium (Os), nickel (Ni), cuivre (Cu), et zinc (Zn), de préférence manganèse (Mn), cobalt (Co), et fer (Fe), et plus préférentiellement dopé en atomes de Fer II et/ou Fer III.

22. Utilisation d'un matériau selon l'une quelconque des revendications 19 à 21 à titre de catalyseur, notamment de catalyseur autosupporté, pour la réduction de l'oxygène.

23. Utilisation d'un matériau selon l'une quelconque des revendications 19 à 21 à titre de matériau cathodique dans un système de pile à combustible à membrane échangeuse de protons (PEMFC).
